# EUROPEAN PATENT APPLICATION

(11) **EP 0 991 247 A2**
(43) Date of publication of application: **05.04.2000**
(21) Application number: 99119260.0
(22) Date of filing: 28.09.1999
(51) Int. Cl.: H04M 1/274

(54) **Device for controlling storage of data in a memory, and method for controlling the storage thereof**

(30) Priority: 30.09.1998 JP 27730698
(71) Applicant: NEC CORPORATION, Tokyo (JP)
(72) Inventor: Kawata, Hitomi, NEC Saitama, Ltd., Kamikawamachi, Kodama-gun, Saitama (JP)
(74) Representative: VOSSIUS & PARTNER

(57) **Abstract**

At least one telephone number is registered for one opponent's name. In the case that plural telephone numbers are registered for one opponent's name, addresses of the respective telephone numbers are related to each other and the respective telephone numbers are stored. In this way, provided is a portable telephone device in which the number of telephone numbers which can be registered for the same name is not limited and its memory can be effectively used. At least two registered opponents' names are made up to one name, and telephone numbers registered correspondingly to these names are registered for one of the opponent's names.

## Description

The present invention relates to a portable telephone device, and in particular to a portable telephone device having a telephone directory function.

Conventionally, a portable telephone device has such a telephone directory function that telephone numbers are beforehand registered and, when necessary, one or more of the registered numbers are displayed. For example, when a call is made on the telephone device, registered telephone numbers are displayed on its display unit and an off-hook operation is performed so as to call a desired person.

Since an opponent may have plural telephone numbers, plural numbers can be registered for any one opponent. The plural numbers are, for example, telephone numbers of any one opponent's home, office, and portable telephone.

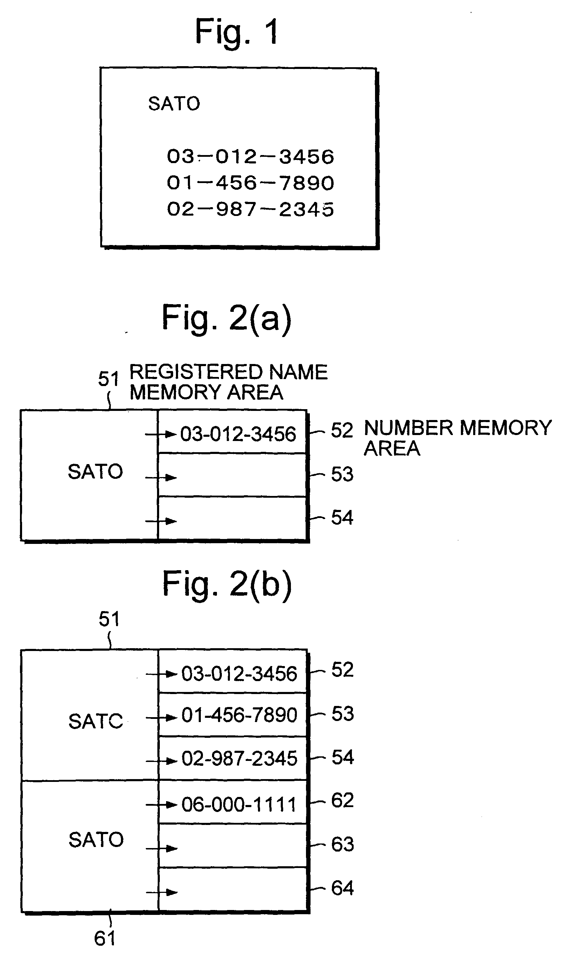

Fig. 1 shows an example in which a registered name and registered telephone numbers are displayed in a conventional display unit. In the example shown in Fig. 1, three telephone numbers are registered for an opponent, Mr. Sato. In this display state, any one is selected among the three telephone numbers and then an off-hook operation is performed so as to make a telephone call to the selected telephone number.

In this way, in conventional portable telephone devices the number of the telephone numbers which can be registered for any one person is beforehand fixed in such a manner that plural telephone numbers can be registered for any one person's name, from standpoint of its memory construction. For example, the number is set so that three telephone numbers can be registered at maximum for any one person. When only one telephone number is registered in this case, the memory area for the other two telephone numbers is not used. Fig. 2(a) shows an example in which a memory area is used in such a state as above.

In Fig. 2(a), "Sato" is registered in a registered name memory area 51, and a telephone number "03-012-3456" is registered in only a number memory area 52 among number memory areas 52-54 disposed correspondingly to the registered name memory area 51.

On the other hand, in order to register 4 or more telephone numbers for any one person, memory areas for two persons are used as follows. As shown in Fig. 2(b), the number memory areas 52-54 corresponding to the registered name memory area 51 are used; therefore, "Sato" is newly registered in a registered name memory area 61 and then a fourth telephone number or subsequent telephone numbers are registered in number memory areas 62-64 correspondingly to the registered name memory area 61. In Fig. 2(b), the number memory areas 63 and 64 are empty.

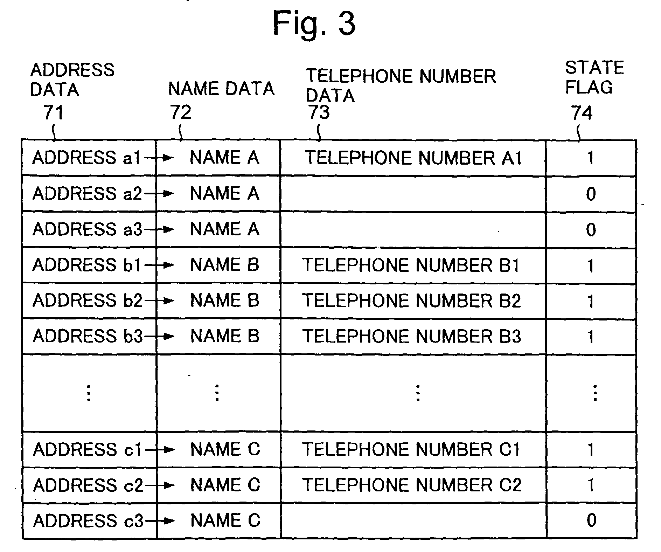

Fig. 3 is a view for explaining the storage state of a memory.

In Fig. 3, an 18 byte storage area for 9 Chinese characters, each of which corresponds to 2 bytes, is used for each name data 72. A 12 byte storage area for 24 digits of number data (2 digits of which correspond to one byte) is used for each telephone number data 73. In the case that the maximum number of registered telephone numbers is 600, each address 71 requires 2 bytes. Each of the addresses 71 represents the address in which a telephone number data corresponding to each name data 72 is stored. Each state flag 74 shows whether there is a telephone number data or not by flag "1" or "0".

In order to store one telephone number for one person in such a type portable telephone device, 32 bytes are totally required. That is, 2 bytes, 18-bytes and 12-bytes are required for an address data, a name data, and a telephone number data, respectively. Since areas for 3 telephone number data are beforehand kept for one person, 96 bytes are required for any one person. For this reason, even if only one telephone number data is stored for name A in Fig. 3, non-used areas for two telephone numbers (name data areas and telephone number data areas, and address data) are kept. Therefore, in the case that telephone numbers of 200 persons are registered, the memory cannot be effectively used unless 3 telephone numbers are registered for each name of the persons.

Moreover, even if only one telephone number is registered for any one person in the above-mentioned case, only telephone numbers for 200 persons can be registered. Therefore, telephone numbers cannot be registered for more than 200 persons.

An object of the present invention is to provide an improved portable telephone device for overcoming the above-mentioned problems.

Another object of the present invention is to provide a portable telephone device in which a memory area for telephone directory function can be effectively used.

Still another object of the present invention is to provide a portable telephone device which can control the number of opponents who can be registered correspondingly to the number of registered telephone numbers.

In order to attain the above-mentioned objects, the data storage controlling device according to the present invention comprises an operation unit for inputting first data and second data, a memory for storing the first data and the second data corresponding to the first data, and a control unit for storing any plural ones of the second data correspondingly to one of the first data, the maximum number of the first data or the second data which can be stored in the memory being not defined in advance.

Preferably, each of the first data is an opponent's name and the second data are opponent's telephone numbers corresponding to the name, and further the present invention is applied to terminals of portable communication devices.

Preferably, the memory stores address data storing the plural second data, and the address data shows an address storing the second data previously registered and the second data subsequently registered.

The **METHOD** for controlling storage of data according to the present invention, comprises the steps of: inputting a first data, storing the inputted first data in a memory, inputting plural second data corresponding to the input first data, storing the inputted second data in the memory, correspondingly to the stored first data and relating the plural second data corresponding to the first data to each other and storing the second data in the memory.

### BRIEF DESCRIPTION OF THE DRAWINGS

These and other objects, features and advantages of this invention will become more fully apparent from the following detailed description taken with the accompanying drawings in which:
Fig. 1 is a view for explaining the prior art,
Figs. 2(a) and 2(b) are views illustrating a storage state in a memory in the prior art,
Fig. 3 is a schematic view illustrating a storage state in the memory in the prior art,
Fig. 4 is a block view of the structure of a preferred embodiment according to the present invention,
Fig. 5 is a structure view illustrating a preferred embodiment of the key operation unit illustrated in Fig. 4,
Fig. 6 is a view illustrating a preferred storage pattern in the RAM illustrated in Fig. 4,
Fig. 7 is a flowchart for explaining the registering operation of a preferred embodiment of the present invention,
Fig. 8 is a flowchart for explaining the registering operation of another preferred embodiment of the present invention,
Fig. 9 is a flowchart for explaining the registering operation of still another preferred embodiment of the present invention,
Fig. 10 is a view for explaining the memory efficiency according to the present invention,
Figs. 11(a) and 11(b) are views illustrating preferred storage patterns,
Fig. 12 is an operation flowchart showing storage control in a control unit,
Fig. 13 is a view illustrating another preferred storage pattern in the RAM illustrated in Fig. 4,
Fig. 14 is a view illustrating still another preferred storage pattern in the RAM illustrated in Fig. 4, and
Fig. 15 is a view illustrating other preferred storage pattern in the RAM illustrated in Fig. 4,
Fig. 16 is a view illustrating a further preferred storage pattern in the RAM illustrated in Fig. 4,
Fig. 17 is a structure view illustrating a further preferred embodiment of the key operation unit illustrated in Fig. 4, and
Fig. 18 is a flowchart for explaining the registering operation of still further preferred embodiment of the present invention.

In the drawings, the same reference numbers denote the same structural elements.

### DESCRIPTION OF THE PREFERRED EMBODIMENTS

Referred to the attached drawings, preferred embodiments of the present invention will be described hereinafter.

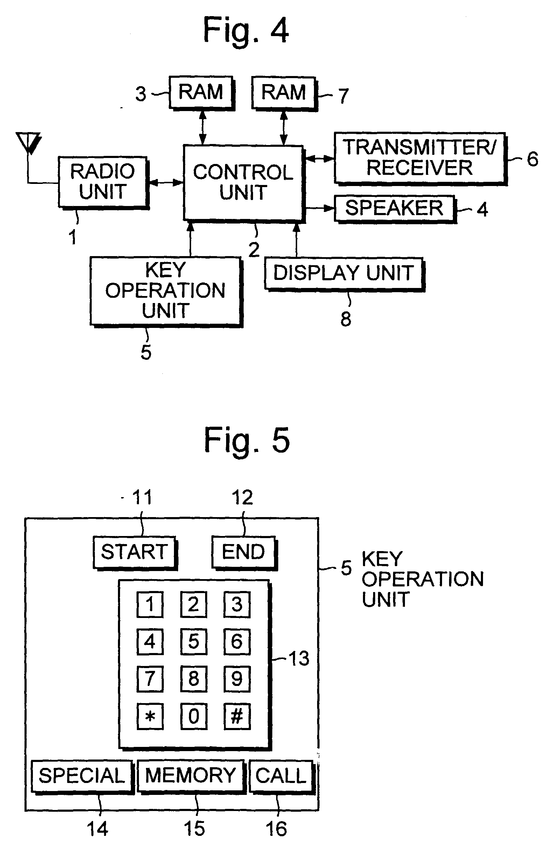

Fig. 4 is a block view of the structure of a preferred embodiment according to the present invention, and illustrates main units of a portable telephone device which is an example of mobile communication devices.

Referring to Fig. 4, when a message from a base telephone office is received at a radio unit 1, a control unit 2 compares peculiar identification (ID) numbers stored in a ROM 3 with the ID number included in the received signals. If they coincide with each other, a speaker 4 as a reporting means is rang. If a carrier operates a start (message-sending) button 11 (see Fig. 5) in response to this receipt report, the control unit 2 sends a signal for responding to the receipt of the massage from the radio unit 1 and a telephone communication is started using a transmitter/receiver unit 5. When the telephone communication is finished, a communication ending button 12 is operated so that the control unit 2 performs communication ending **Method**.

On the other hand, in the case that a message is sent, an opponent's telephone number is specified using ten keys 13 of a key operation unit 5 and the start button 11 is operated. At this time, the control unit 2 sends a call signal from the radio unit 1. The specified opponent's telephone number is displayed in a display unit 8 for confirmation. A telephone circuit is connected to the opponent. When the opponent responds thereto, a communication starts.

In a RAM 7 as a memory, memory telephone numbers or shortened telephone numbers are preferably registered. These are opponents' telephone numbers which are beforehand registered correspondingly to the opponents. Even if at the time of sending a message an opponent's telephone number is not input using the ten keys, a desired opponent is selected from the RAM 7 so that a telephone call can be made to the selected opponent.

When a telephone call is made, for example, registered opponents' names and the telephone numbers corresponding to these names can be displayed in the display unit 8 by operating a call button 16 of the key operation unit 5. They are then scrolled to select a desired opponent and his/her telephone number using the ten keys 13 or the like. The start button 11 is then pushed down so that a telephone call can be made to him/her.

At the time of the registration, opponents' names and telephone numbers corresponding to the opponents can be inputted by operating the ten keys 13. They can be registered in the RAM 7 by pushing down a memory button 15. For the opponent who has already been registered, other telephone number can be added and registered. The additional registration can be performed by operating a special button 14. That is, when the opponent's name which has already been registered is displayed in the display unit 8, the special button 14 is pushed down so that the present system is changed to an additional registration mode. If a new telephone number is inputted using the ten keys and the memory button is pushed down, the new telephone number is additionally registered for the same opponent's name by pushing down the memory button 15.

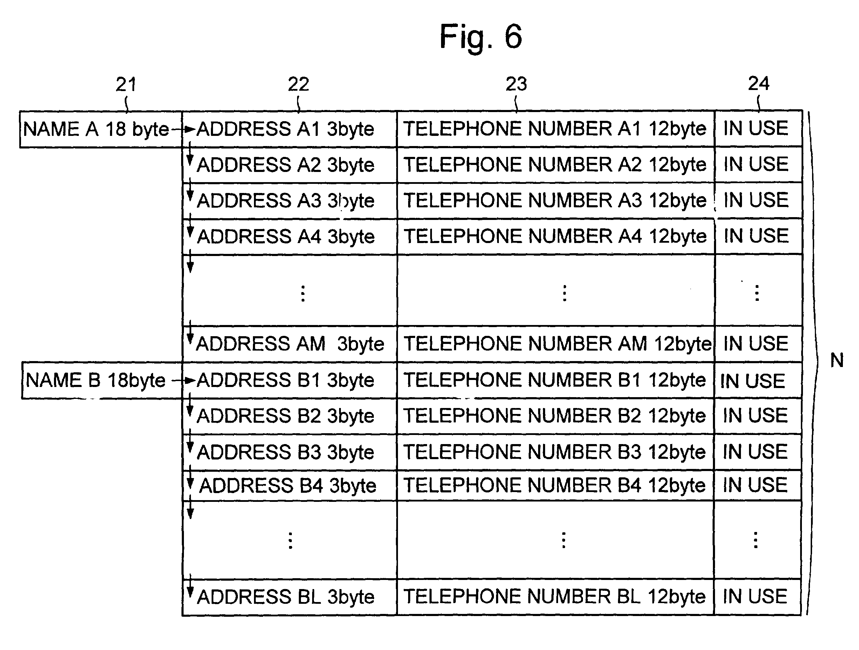

Fig. 6 is a conceptual view for explaining the use state (storage state) of the memory in the present invention.

In Fig. 6, each of name data (section) 21 is a store area for 9 Chinese characters, each of which corresponds to 2 bytes. 18 bytes are used therein. The name data are not necessarily composed of Chinese characters, and may be composed of alphabets, symbols representing names, or the like. Each of telephone number data (section) 23 is a store area for 24-digit number data, 2 digits of which correspond to 1 byte. 12 bytes are used therein. Each of address data (section) 22 stores the address of each of telephone numbers and further stores the address of the next-registered telephone number. That is, in the present invention, a free number of telephone numbers can be registered for a single registered opponent's name; therefore, plural telephone numbers are registered at random (in arbitrary addresses) for the registered opponent's name. For this reason, it is necessary to make a memory so as to understand a single opponent's name corresponds to which of the telephone numbers, that is, to the telephone number stored in which of the addresses.

Specifically, when the number of telephone numbers registered for opponent's name A is M, the address of a telephone number A1 and the address of a subsequently-inputted telephone number A2 are stored in an address data A1. The address of a telephone number A2 and the address of a subsequently-inputted telephone number A3 are stored in an address data (section) A2. On the assumption that the maximum number of telephone numbers which can be registered is 600, for the address data A1, 10 bits are necessary for each of the telephone number A1 stored in the address data A1 and the telephone number A2 stored in the address data A2. That is, the address data A1 totally requires 20 bits. Thus, 3 bytes are necessary for any address. Therefore, in the case that a new telephone number is additionally registered for a single registered opponent 's name, 3 bytes for any address 22 and 12 bytes for any telephone number 23 are used, that is, 15 bytes are totally used in the memory.

The following will describe, as an example, a case that telephone number A1 for name A, telephone number B1 for name B, and telephone number A2 for the name A are registered in this order. A registration mode is first selected by a predetermined key operation. The opponent's name A and the telephone number A1 are inputted and then the memory button 15 is pushed down to register the name A and the telephone number A1. At this time, only the address in which the telephone number A1 is stored is stored in the address data A1. Next, the opponent's name Band the telephone number B1 are inputted and then the memory button 15 is pushed down to register the name B and the telephone number B1. At this time, only the address in which the telephone number B1 is stored is stored in the address data B1. In the case that in the state that these are stored the telephone number A2 is additionally registered for the name A, the name A is first displayed in the display unit 18 by operating the call button 16. When the special button 14 is operated in the state that the name A is displayed, the registration mode is changed into an additional registration mode. When the telephone number A2 is inputted and the memory button 15 is operated in this mode, the telephone number A2 is stored in the RAM 7. At this time, the address in which the telephone number A2 is stored is stored in the address data A2, and the address of the telephone A1 and the address of the telephone number A2 are stored in the address data A1.

In this embodiment, in the state that the name is displayed the registration mode is changed into the additional registration mode by operating the call button. However, this is not restrictive. Preferably, in the state that the name is displayed the present system is shifted to the additional registration mode by operating the special button.

In the case that the telephone numbers A1 and A2 are continuously inputted and registered for the name A, the address of the telephone number A1 is stored in the address data A1 and the addresses of the telephone numbers A1 and A2 are stored in the address data A2 by inputting the telephone number A1 and then operating the memory button 15, and subsequently (preferably, pushing down the special button to shit the present system to the additional registration mode), inputting the telephone number A2 and then operating the memory button 15.

According to the present invention, all of state flags 24 come to show "in use" by registering telephone numbers continuously in the above-mentioned way.

The portable telephone device has other elements than the elements shown in Fig. 4, but about the elements which are not related to the present invention the explanation thereof is omitted.

Fig. 4 shows the portable telephone device, but the present invention may be applied to mobile communication devices, such as a pager, a car telephone, a cordless telephone, the second-generation cordless telephone and PHS. Furthermore, the present invention may be applied to fixed communication devices, portable data-terminals, personal computer, or the like, besides the mobile communication devices.

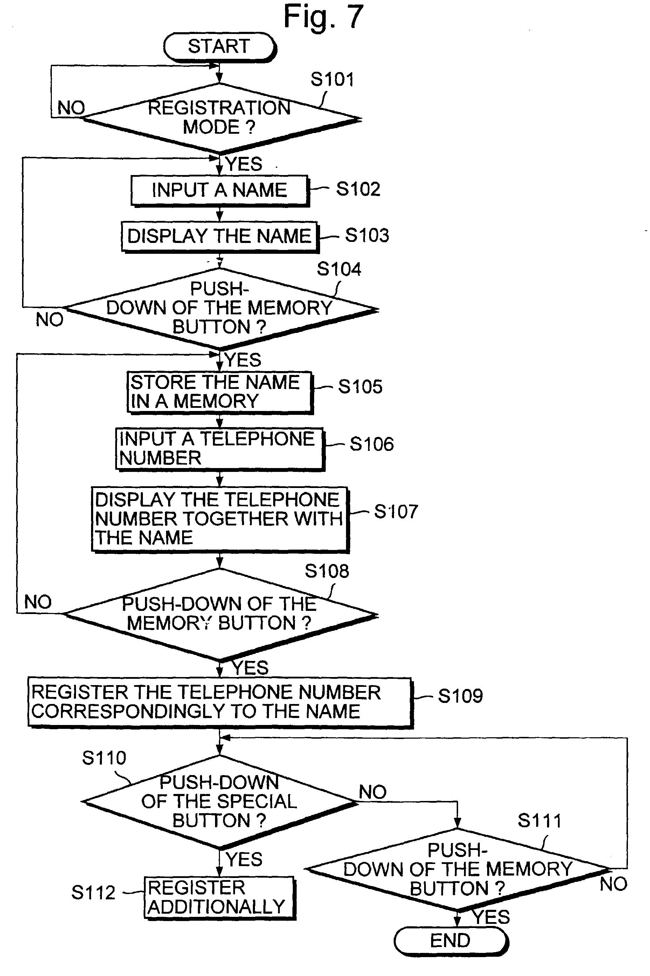

Fig. 7 is a flowchart showing a preferred example of the operation of new registration according to the present invention.

Referring to Fig. 7, the control unit 2 first judges whether or not the registration mode is selected by a predetermined key operation (step S101). When the present mode is judged as the registration mode (step S101, YES), a name to be registered is inputted by operating the ten keys 13 or the like (step S102) and the inputted name is displayed in the display unit 8 (step S103). The operation for inputting the name is continued until the memory button 15 is pushed down (step S104, NO). When the memory button 15 is pushed down (step S104, YES), the inputted name is stored in the RAM 7 as a memory (step S105).

Next, a telephone number is inputted (step S106), and the inputted telephone number is displayed together with the displayed name (step S107). The input of the telephone number is continued until the memory button 15 is pushed down (step S108, NO). When the memory button 15 is pushed down (step S108, YES), the telephone number is stored in the RAM 7, correspondingly to the name (step S109).

If the special button 14 is not pushed down after the telephone number is stored (step S110, NO), the registration mode ends by pushing down the memory button 15 (step S111, YES). On the other hand, if the special button 14 is pushed down in the step S110, the present device is shifted to the additional registration mode for the same name (step S112).

When a new name is registered in this way, a single telephone corresponding to each of the names shown in Fig. 6 is being stored accordingly.

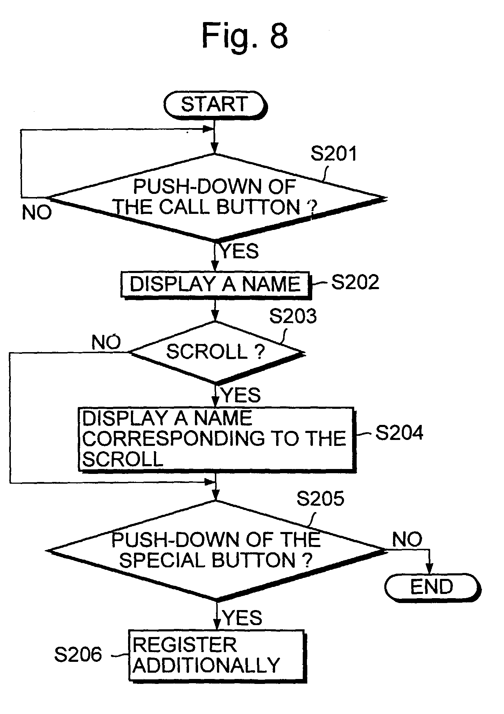

Fig. 8 is a flowchart for explaining a method for shifting the system from other modes than the registration mode to the telephone number addition mode.

Referring to Fig. 8, when the call button 16 is pushed down, e.g., to display memory telephone numbers (step S201, YES), one of the name registered in the RAM 7 is displayed in the display unit 8 (step S202, YES). In the case that the displayed name is not desired, names are scrolled and displayed until a desired name is displayed by operating the ten keys, or the like. Thus, the desired name is displayed (steps S203 and S204). When the special button 14 is pushed down in the state that the desired name is displayed (step S205, YES), the present system is shifted to the mode for performing additional registration (step S206). In the case that the special button is not pushed down in the step S205, the present system is not shifted to the additional registration mode and a method corresponding to an operated button is performed.

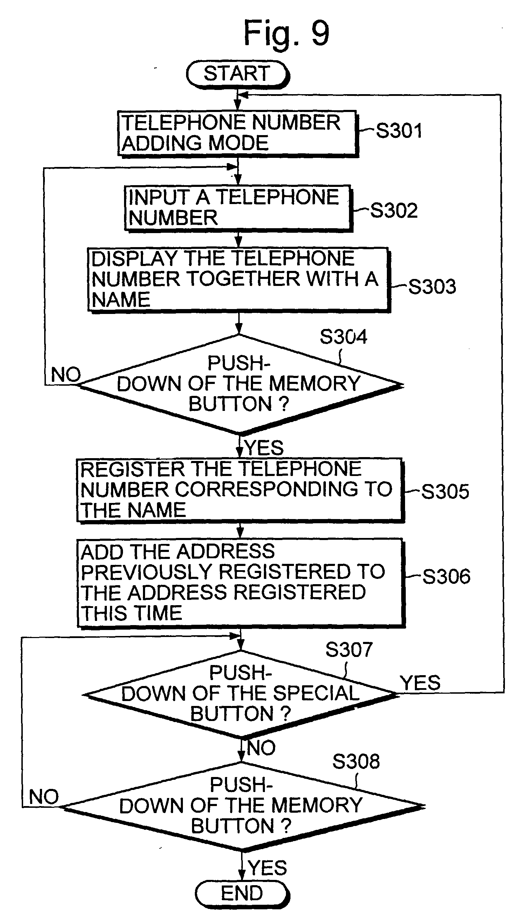

Fig. 9 is a flowchart for explaining the additional registration of telephone numbers according to the present invention.

Referring to Fig. 9, in the case that the additional registration mode is selected as shown in Figs. 7 and 8, the present system is shifted to the additional registration mode (step S301). In this state, a telephone to be added is inputted (step S302), the inputted telephone number is displayed together with the displayed name (step S303). In the display of telephone numbers, only the telephone number inputted this time may be displayed, but the telephone number previously inputted, as well as the above-mentioned telephone number, is preferably displayed in order to avoid the input of the same telephone number.

The input of the telephone number is continued until the memory button 15 is pushed down. When the memory button 15 is pushed down (step S304, YES), a new telephone number is additionally registered in a new address for the same name (step S305). At the time of this registration, the address of the telephone number previously stored and the address of the telephone number stored this time are stored in the address data (the reference No. 22 in Fig. 3) in which the address previous registered is stored (step S306).

When the special button 14 is pushed down after the storage of the telephone number (step S307, YES), additional registration of telephone numbers is continued (steps S301-306). If the special button 14 is not pushed down but the memory button 15 is pushed down (step S308, YES), the additional registration mode ends.

The following will describe a specific example of new and additional registrations.

When "Sato" is inputted as an opponent's name and the memory button 15 is pushed down, "Sato" is registered in the memory. Subsequently, a telephone number "0303333333" is inputted to register the telephone number "0303333333" correspondingly to "Sato". The address in which this telephone number is stored is stored in the address data A1. In the case that a telephone number "0107654321" is continuously registered in this state, the special button 14 is pushed down and the telephone number "0107654321" is inputted. When the memory button 15 is pushed down, the new telephone number "0107654321" is stored in an new address, correspondingly to the opponent's name "Sato" (the address in which the telephone number "0107654321" is stored is stored in the address data A2). At this time, the address in which the two telephone numbers are stored is stored in the address data A1.

In the case that a telephone number "0301111111" is continuously registered, this telephone number is inputted after the special button 14 is pushed down. Thereafter, by pushing down the memory button 15, the telephone number "0301111111" is stored in a new address and the address in which this telephone number is stored is stored in the address data A3. The address in which the telephone numbers "0107654321" and "0301111111" are stored is stored in the address data A2.

Next, in the case that an entirely new telephone number "0301234567" is additionally registered in the state that the three telephone numbers are registered and used, the special button 14 is pushed down in the state that "Sato" is displayed by operating the call button 16, or the like. In this way, the system is shifted to the additional registration mode and then the telephone number "0301234567" is inputted. Thereafter, the memory button 15 is pushed down. In response to this, the telephone number "0301234567" is stored in an address, and then the address of the telephone number previously registered and the address of the telephone number registered this time are stored in the address data A3 corresponding to the telephone number previously registered.

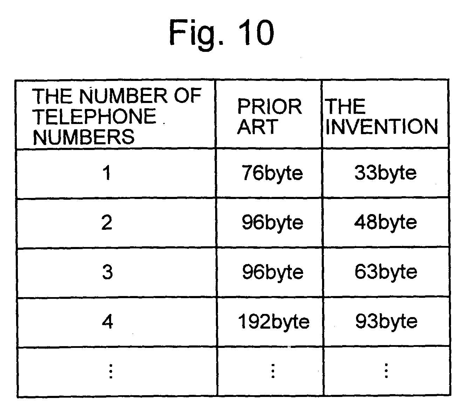

According to the present invention, the amount of the used memory can be greatly reduced in such a way as above, as understood from comparison of the present invention with the prior art in Fig. 10. Moreover, more telephone numbers and telephone numbers of more persons can be registered.

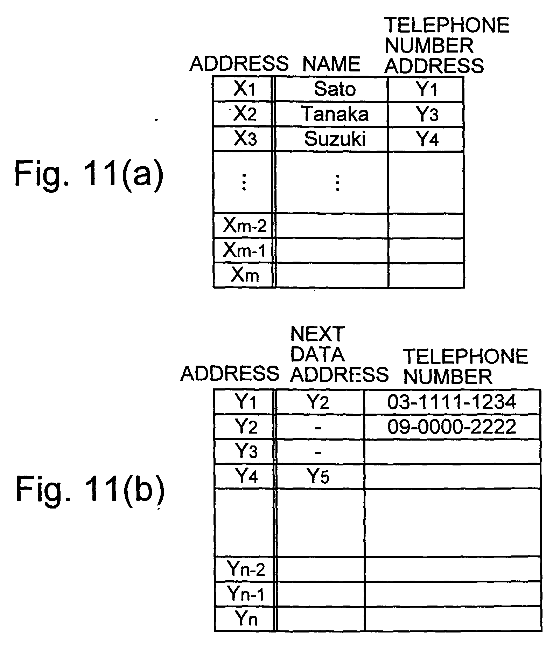

Figs. 11(a) and 11(b) show specific memory maps. Fig. 11(a) shows a name area and Fig. 11(b) shows a telephone number area. Namely, the memory is separated into two areas, that is, the name area and the telephone number area. In the name area, a name and a head address in which a telephone corresponds to this name is stored are stored in each of memory addresses X1-Xm, in which m represents an arbitrary integer. In Fig. 11(a), two telephone numbers are registered for "Sato".

In the telephone number area, both the next address in which a telephone number is stored for the same name and the telephone number are stored for each of memory addresses Y1-Yn, in which n is an arbitrary integer. Preferably, n is larger than m, but may be set by a designer.

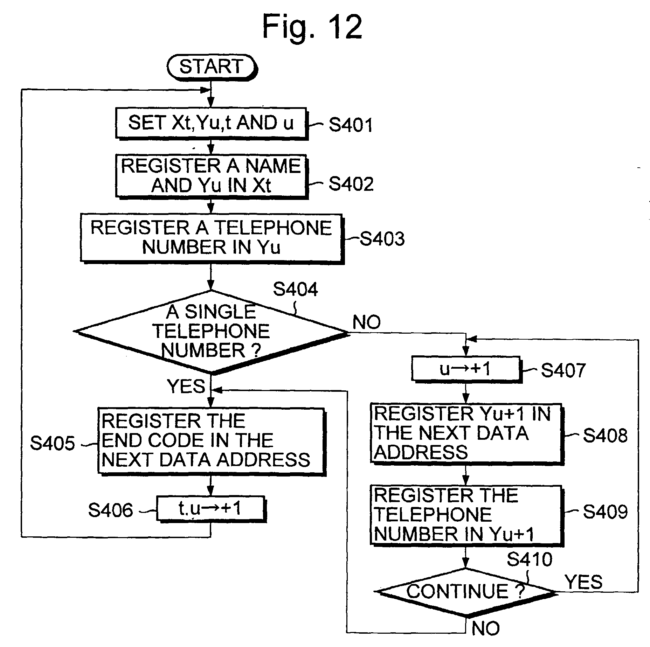

Fig. 12 is a flowchart for explaining control of storage into the memory by the control unit. Referring to Fig. 12, when a name and a telephone number are registered, an address Xt of the name area and an address Yu of the telephone number area are set (step S401). At the initial time, 1 is set in each of "t" and "u". In the address Xt, both the name and the address Yu of the telephone number area in which the telephone number corresponding to this name is stored are stored (step S402). At the initial registration time, the name and the telephone number area address Y1 are stored in the address X1 of the name area. Subsequently, the telephone number corresponding to the name is stored in the address Yu of the telephone number area (step S403). In the case that only one telephone is registered for a single name (step S404, YES), an end code ("-" in the embodiment) for representing that there is not any subsequent telephone number is registered in the next data address of the telephone number area (step S405). Thereafter, "t" and "u" are counted up by "1", respectively (step S406). In this state, the system awaits the following registration.

On the other hand, in the case that plural telephone numbers are registered for a single name (step S404, NO), "u" is counted up by "1" (step S407) and Yu+1 is registered in the next data address of the telephone number area (step S408). The telephone number is then stored in the address Yu+1 (step S409). In the case that 3 or more telephone numbers are registered (step 410, YES), the method from the step S407 is repeated. In the case that there is not any additional telephone number, the system is shifted to the step 405.

The following is assumed: the case that a telephone number is added to the name which has already been registered, for example, the case that, in the state that two telephone numbers are registered for "Sato" and one telephone number is registered for "Tanaka", a third telephone number is additionally registered for "Sato". In this case, the end code of the next data address for "Sato" is searched and then an empty address is registered for this next data address. In the case that, for example, the address Yn-2 is empty, Yn-2 is registered in the next data address of the telephone number address Y2. In other words, the next data address of the telephone number address Y2 is changed from the end code "-" to "Y-2". However, an empty address is not necessarily set. The address Y3 and thereafter are shifted in the manner that their order is moved down, and a new telephone number can be registered in the address Y3. In this case, the telephone numbers for the same name are continuously stored.

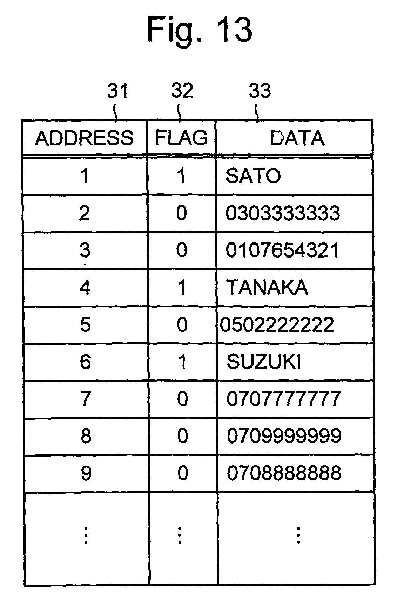

Fig. 13 shows a preferred use state of the memory according to the present invention.

Referring to Fig. 13, a data 33 on a name or a telephone number is stored in each of addresses 31. Each flag data 32 shows whether the data stored in each of the addresses is a name or a telephone number. For example, if the flag data is "1", the flag data shows a name. If the flag data is "0", the flag data shows a telephone number.

Two telephone numbers for "Sato" are stored in addresses 2 and 3, and a telephone number for "Tanaka" is stored in an address 5. Three telephone numbers for "Suzuki" are stored in addresses 7-9.

In the case that these names are newly registered, a name is first stored in a first, empty address and then an inputted telephone number is stored in the next address. For example, in the case that "Sato" is newly registered in the state that the memory is entirely empty, "Sato" is stored in an address 1 in the state that the flag data is set to "1". Subsequently, his/her inputted telephone numbers are stored in the addresses 2 and 3 in the state that the flag data are set to "0". In the case that "Tanaka" is next registered, "Tanaka" is stored in an empty address 4 and his/her telephone number is stored in the address 5. In the same way, "Suzuki" is stored in an address 6 and his/her telephone numbers are stored in the addresses 7-9.

In the case that in this state an entirely new third telephone number is registered for "Sato", the new third telephone number is inputted and registered in the state that "Sato" is displayed. In this way, the data in or after the address 4 are shifted and stored in or after the address 5, and then the new third telephone number is stored in the address 4 which has been empty.

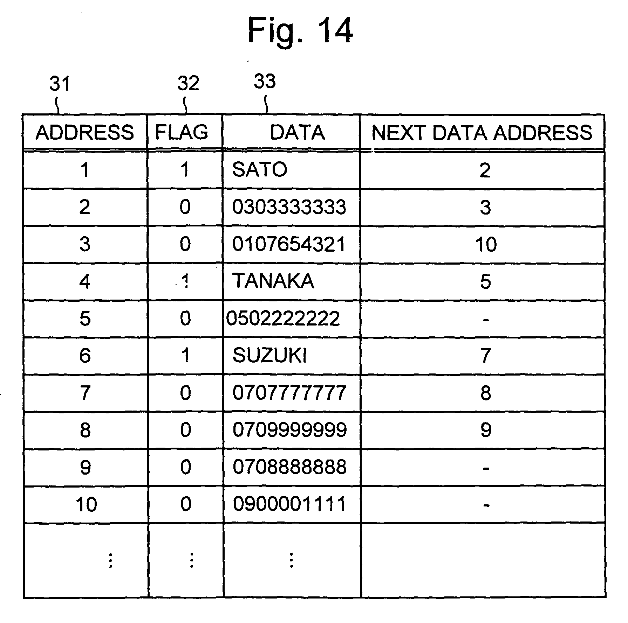

On the other hand, in the case that the above-mentioned shift is not performed, a next data address is set to combine continuos data, as shown in Fig. 14. Therefore, in the case that the third telephone number is newly registered in the state that the two telephone number are registered for "Sato", the new telephone number is registered in an empty address "10" and the end code "-" of the address 3 is changed to the address 10.

In the case that names are scrolled when memory telephone numbers are used, the addresses having the flag data of "1" are in sequence read and in this state plural corresponding telephone numbers (telephone numbers until the flag data next becomes "1") can be displayed at a time on the display unit. In the case that all of the telephone numbers cannot be displayed at a time, the telephone numbers are scrolled so that not only the names but also the telephone numbers are scrolled. When, for example, the call button 16 is pushed down, the first name "Sato" is displayed and then the names (data having the flag data of "1") can be scrolled in the forward direction or in the reverse direction by pushing down "1" or "3" of the ten keys. On the other hand, in the case that only one telephone number can be displayed in the state that a name is displayed, the telephone number corresponding to the name can be displayed by scroll in the forward or reverse direction by pushing down "4" or "6" of the ten keys. That is, when "4" of the ten keys is pushed down in the state that "Suzuki" and a telephone number "0707777777" are displayed, a telephone number "0709999999" stored in the next address 8 is displayed. This operation is performed in the addresses until their flag data becomes "1".

In this embodiment, its memory can be more effectively used than the prior art shown in Fig. 3 since empty addresses such as the addresses a2, a3, c3 are not generated.

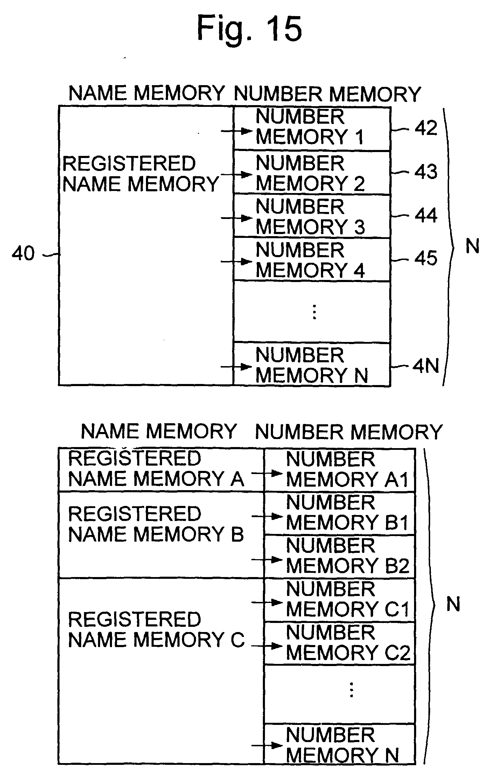

Even if as shown in Fig. 15 the same name is redundantly stored for plural telephone numbers in the same way as in the prior art, empty spaces as in the prior art shown in Fig. 3 become unnecessary. Thus, the memory can be effectively used.

There may be a case that two names A and B are registered as shown in Fig. 6 but the name A is equal to the name B. The following will describe a method in which they are integrated in such a case. In the case that a name "Sato" and a telephone number are newly registered in the state that the same name "Sato" is separately registered as the name A, two "Sato"s will be registered and different telephone numbers will be registered for each of the names. In this case, it is desired that when this fact is noticed, all telephone numbers can easily be related to one "Sato".

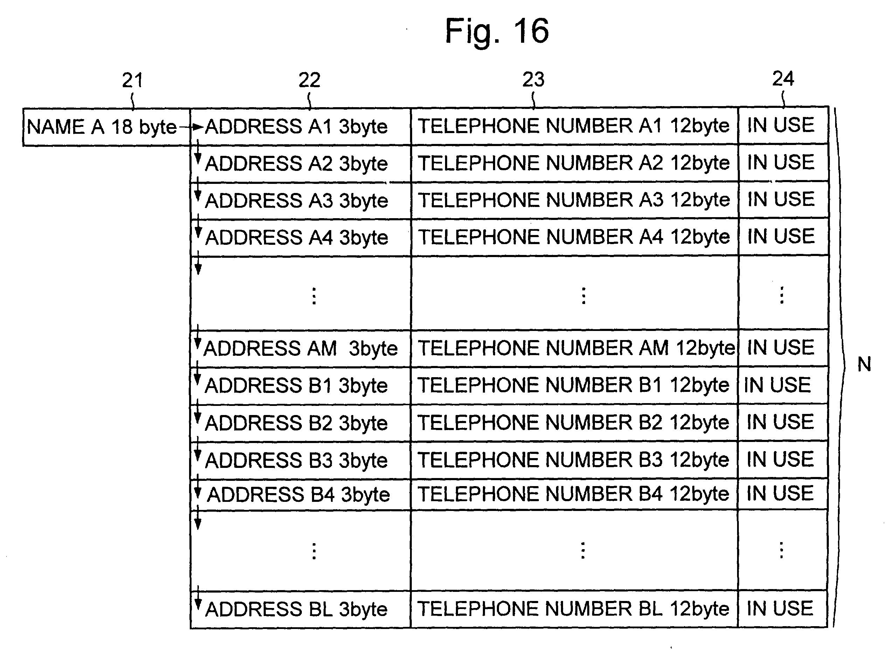

That is, in the case that the name A and the name B in Fig. 6 show the same person, addresses A1-AM following the name A are integrated with addresses B1-BL following the name B, as shown in Fig. 16, so that the addresses A1-AM and B1-BL are related to the name A.

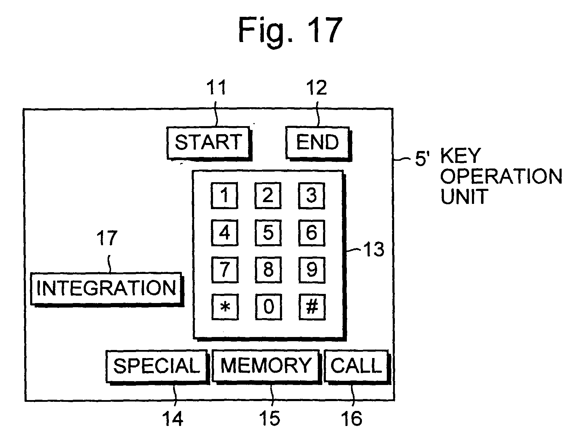

Fig. 17 shows a key operation unit 5' for realizing the integration, which corresponds to the key operation unit 5 shown in Fig. 4. The key operation unit 5' is characterized by having not only the buttons 11-16 arranged in the key operation unit shown in Fig. 5 but also an integration button 17.

A name registered in the memory is displayed by operating the call button 16. When the integration button 17 is pushed down in the state that the name is displayed, the displayed name is judged as a former name to be integrated. A latter name to be integrated is selected by operating the call button 16, and the telephone number following the latter name to be integrated is registered in relation to the former name to be integrated by operating the integration button 17.

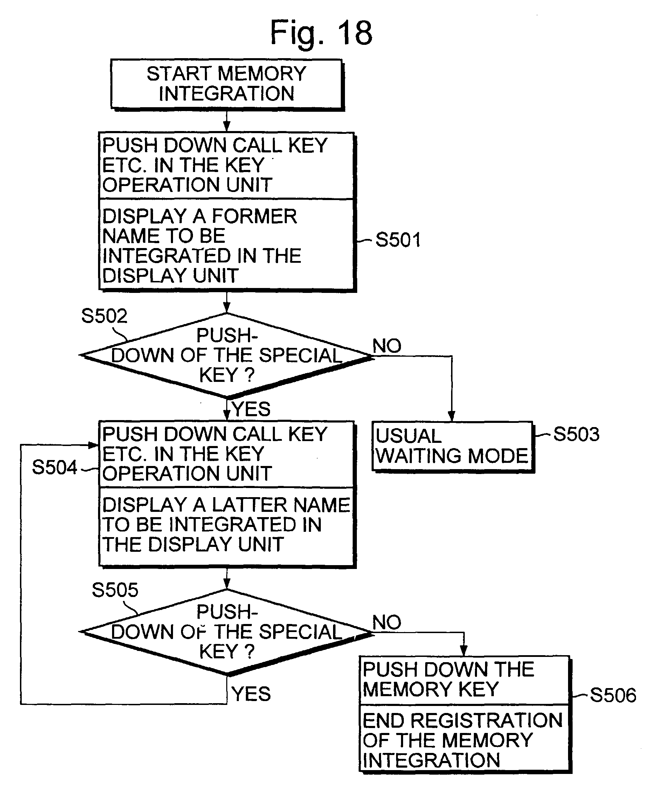

The following will describe the operation in detail, referring to Fig. 18.

When the call key 16 is pushed down, a name registered in the memory is displayed (step S501). By repeating push-down of the call key 16, the displayed name is successively changed by scroll. When the integration button 17 is pushed down in the state that the name to be integrated is displayed (step S502, YES), the control unit judges the displayed name as a base name for integration. When the call key 16 is further pushed down in this state, the displayed name is again changed by scroll. If the integration button is pushed down when a name to be integrated with the above-mentioned base name for integration is displayed (step S505, YES), it is judged that there is another name to be integrated. Thus, the system is shifted to the step S504. On the other hand, in the state that the name to be integrated is displayed by pushing down the call key 16 (step S504) after the push-down of the integration button in the step S502, the memory key 15 is pushed down so that integration is performed in the memory (step S506). Namely, in the address AM, B1 is registered as the next address.

Other keys may function as the integration key 17. For example, the same operation as by the integration key can be performed, for example, by pushing the special key 14 or the like key for a long time.

Concerning Figs. 11, and 13-15, the same facts are true.

Even for different names, they are integrated by integration operation. It is assumed that in the state that one telephone number is registered for, for example, "Elizabeth", a new telephone number is registered for "Liz", which is a nickname of "Elizabeth". When a user wants to integrate the both, integration method can be performed. That is, if "Elizabeth" is first read out and subsequently "Liz" is read out to integrate them, two telephone numbers can be registered in relation to "Elizabeth". If the operation is performed in reverse order thereof, they are integrated in relation to "Liz".

According to the example shown in Fig. 13, in the case that "Tanaka" in the address 4 is integrated with "Sato" in the address 1, "Tanaka" in the address 4 is erased and data in and after the address 5 are slid in and after the address 4.

As described above, according to the present invention, if in the case of searching such data that a name and a telephone number are registered as a pair of data a name to be searched or an identification data for the name is inputted and the inputted data is consistent with one of registered data, one name or identification data is displayed and plural telephone numbers are displayed for the same name or the same identification data. In this way, a user can recognize a desired name and his/her telephone number(s) easily. Thus, easiness of handling and convenience are improved.

According to the present invention, plural registered names are integrated with each other, so that telephone numbers registered correspondingly to the separate names can be registered in relation to one of the names.

While the invention has been described with reference to specific embodiments thereof, it will appreciated by those skilled in the art that numerous variations, modifications, and embodiments are possible, and accordingly, all such variations, modifications, and embodiments are to be regarded as being within the sprit and scope of the present invention.

## Claims

1. A data storage controlling device, comprising:
an operation unit for inputting first data and second data,
a memory for storing the first data and the second data corresponding to the first data, and
a control unit for storing any plural ones of the second data correspondingly to one of the first data,
the maximum number of the first data or the second data which can be stored in the memory being not defined in advance.

2. The device according to Claim 1, wherein each of the first data is an opponent's name and the second data are opponent's telephone numbers corresponding to the name.

3. The device according to Claim 1 or 2, wherein the memory stores address data storing the plural second data.

4. The device according to Claim 3, wherein the address data shows an address storing the second data previously registered and the second data subsequently registered.

5. The device according to any of Claims 2 to 4, wherein in the state that at least two opponents' names are registered telephone numbers corresponding to at least two opponents' names are set as telephone numbers corresponding to one opponent's name.

6. The device according to Claim 5, wherein a telephone number corresponding to a second opponent's name is set as a telephone number corresponding to a first opponent's name by displaying the first opponent's name and continuously displaying the second opponent's name.

7. The device according to Claim 6, wherein the telephone number corresponding to the first opponent's name and the telephone number corresponding to the second opponent's name are set as telephone numbers corresponding to the first opponent's name.

8. A method for controlling storage of data, comprising the steps of:
inputting a first data,
storing the inputted first data in a memory,
inputting plural second data corresponding to the input first data,
storing the inputted second data in the memory, correspondingly to the stored first data, and
relating the plural second data corresponding to the first data to each other and storing the second data in the memory.

9. The method according to Claim 8, wherein the first data is an opponent's name, and the second data are telephone numbers corresponding to the opponent's name.

10. The method according to Claim 8 or 9, wherein an address storing the plural second data corresponding to the single first data is stored as a data for the first data.

11. The method according to Claim 10, wherein the data shows an address storing the second data previously registered and the second data subsequently registered.

12. The method according to any of Claims 9 to 11, wherein at least two opponents' names among the registered opponents are made up to one name.

13. The method according to Claim 12, wherein the telephone number corresponding to the first opponent's name and the telephone corresponding to the second opponent's name are set as telephone numbers corresponding to the first opponent's name.
